# FASCICULE DE BREVET EUROPEEN

(11) **EP 0 986 153 B1**
(45) Date de publication et mention de la délivrance du brevet: **18.04.2007**
(21) Numéro de dépôt: 99410108.7
(22) Date de dépôt: 06.09.1999
(51) Int. Cl.: H02B 11/10

(54) **Appareillage électrique de coupure comportant un disjoncteur débrochable et des indicateurs de la position du disjoncteur dans son châssis**
Elektrisches Schaltgerät mit einem trennbaren Schalter und Indikatoren der Schalterposition auf seinem Gestell
Electrical switchgear having a disconnectable circuit breaker and indicators of the breaker position on its frame

(30) Priorité: 11.09.1998 FR 9811515
(43) Date de publication de la demande: 15.03.2000
(73) Titulaire: SCHNEIDER ELECTRIC INDUSTRIES SAS, 92500 Rueil-Malmaison (FR)
(72) Inventeur: Grelier, Claude, 38050 Grenoble cedex 09 (FR); Joubert, Jacques, 38050 Grenoble cedex 09 (FR)
(74) Mandataire: Ritzenthaler, Jacques

(56) Documents cités:
- US-A- 4 236 189

## Description

L'invention concerne un appareillage électrique de coupure comportant un châssis fixe et un disjoncteur mobile dans le châssis fixe entre une position débrochée et une position embrochée.

Le document EP-A-0 677 904 décrit un dispositif de signalisation de la position d'un tiroir comportant un appareillage de coupure avec trois interrupteurs de signalisation et un organe de commande de ces interrupteurs de signalisation en fonction de la position du tiroir dans le châssis de l'appareillage. L'organe de commande est une tirette dont la position reflète celle du tiroir, et comportant des ergots aptes à coopérer chacun avec l'un des interrupteurs de signalisation de manière à ce que l'un des interrupteurs soit activé lorsque le tiroir atteint une position dite débrochée, à ce qu'un deuxième interrupteur de signalisation soit activé à l'arrivée dans une position dite de test, et à ce que le troisième interrupteur de signalisation soit activé lors du passage par une position dite embrochée. Par mesure d'économie, l'organe de commande est conformé de telle manière qu'il puisse être utilisé indifféremment avec des interrupteurs de signalisation se situant à droite ou à gauche du tiroir. Avec un tel dispositif, il n'est toutefois pas possible de moduler sur site le nombre d'interrupteurs affectés à une signalisation donnée, ou de choisir sur site quel interrupteur sera affecté à une signalisation donnée.

Un objectif de la présente invention est donc de palier les inconvénients de l'état de la technique et en particulier de proposer un appareillage embrochable comportant une pluralité d'interrupteurs électriques de signalisation, affectés chacun à la signalisation d'une position indexée du disjoncteur dans son châssis, permettant de modifier l'affectation de certains interrupteurs sur site.

Un deuxième objectif est de permettre de retarder dans la chaîne de fabrication le choix de l'emplacement des interrupteurs affectés à une position indexée donnée du disjoncteur.

Ces objectifs sont atteints grâce à un appareillage électrique de coupure comportant
- un châssis fixe,
- un disjoncteur mobile dans le châssis fixe entre une position embrochée et une position débrochée,
- un mécanisme réversible d'entraînement du disjoncteur entre sa position embrochée et sa position débrochée,
- un élément mobile , solidaire du mécanisme d'entraînement ou du disjoncteur , susceptible de prendre une pluralité de positions par rapport au châssis , entre une première position extrême et une deuxième position extrême, et définissant un premier intervalle indexé de positions, réduit le cas échéant à une première position indexée, et un deuxième intervalle indexé de positions, réduit le cas échéant à une deuxième position indexée,
- un premier interrupteur électrique de signalisation comportant au moins deux bornes et un organe primaire d'actionnement apte à fermer un circuit électrique reliant les deux bornes en passant d'une première à une deuxième position,
- un deuxième interrupteur électrique de signalisation comportant au moins deux bornes et un organe primaire d'actionnement apte à fermer un circuit électrique reliant les deux bornes en passant d'une première à une deuxième position,
- des moyens d'indexation aptes à être montés sur l'appareillage dans un premier état
dans lequel ils sont aptes à coopérer avec le premier interrupteur de manière à faire passer l'organe primaire d'actionnement du premier interrupteur d'une de ses positions à l'autre lorsque l'élément mobile atteint son premier intervalle indexé de positions, et à coopérer avec le deuxième interrupteur de manière à faire passer l'organe primaire d'actionnement du deuxième interrupteur d'une de ses positions à l'autre lorsque l'élément mobile atteint son deuxième intervalle indexé de positions,
dans lequel
- les moyens d'indexation sont aptes à être montés sur l'appareillage dans un deuxième état dans lequel ils sont aptes à coopérer avec le premier interrupteur de manière à faire passer l'organe primaire d'actionnement du premier interrupteur d'une de ses positions à l'autre lorsque l'élément mobile atteint son deuxième intervalle indexé de positions, et à coopérer avec le deuxième interrupteur de manière à faire passer l'organe primaire d'actionnement du deuxième interrupteur d'une de ses positions à l'autre lorsque l'élément mobile atteint son premier intervalle indexé de positions.

Préférentiellement, les moyens d'indexation comportent :
- un premier dispositif de support,
- un deuxième dispositif de support,
- un premier organe d'indexation qui, dans le premier état des moyens d'indexation, coopère avec le premier dispositif de support et avec le premier interrupteur et qui, dans le deuxième état des moyens d'indexation, coopère avec le deuxième dispositif de support et avec le deuxième interrupteur,
- un deuxième organe d'indexation qui, dans le premier état des moyens d'indexation, coopère avec le deuxième dispositif de support et avec le deuxième interrupteur, et qui, dans le deuxième état des moyens d'indexation, coopère avec le premier dispositif de support et avec le premier interrupteur.

Pour permuter les fonctions des deux interrupteurs, il suffit alors de permuter les deux organes d'indexation, d'où une grande simplicité d'utilisation.

Selon un mode de réalisation préférentiel, dans chacun des états des moyens d'indexation, le premier et le deuxième dispositifs de support sont fixes par rapport aux bornes des interrupteurs et en ce que, dans chacun des états des moyens d'indexation, chaque organe d'indexation est mobile par rapport au dispositif de support avec lequel il coopère et est apte à assurer une transmission cinématique entre l'élément mobile d'entraînement et l'organe primaire d'actionnement. Dans ce cas, chaque organe d'indexation est spécifique d'une position d'indexation. Avec ce dispositif, il devient également possible de modifier le nombre d'interrupteurs affectés à une position donnée du disjoncteur dans son châssis, pour peu que l'on dispose d'organes d'indexation supplémentaires des deux types en nombre suffisant. Par exemple, si l'on désire que tous les interrupteurs soient affectés à la première position d'indexation de l'appareillage, il suffit de remplacer tous les organes d'indexation semblables à l'organe du deuxième type par des organes semblables à l'organe du premier type.

Plus spécifiquement, chacun des organes d'indexation est un levier qui, dans chacun des états des moyens d'indexation, est lié par un pivot au dispositif de support avec lequel il coopère. Alternativement, les différents organes d'indexation peuvent être des cames de formes spécifiques.

Selon un autre mode de réalisation, dans chacun des états des moyens d'indexation, le premier et le deuxième dispositifs de support sont mobiles par rapport aux bornes des interrupteurs et sont entraînés par l'élément mobile. Par ailleurs, dans chacun des états des moyens d'indexation, chaque organe d'indexation est fixe par rapport au dispositif de support avec lequel il coopère et est apte à assurer une transmission cinématique entre le dispositif de support avec lequel il coopère et l'organe primaire d'actionnement.

Selon un autre mode de réalisation, l'appareillage est tel que dans un autre état des moyens d'indexation,
- le premier organe d'indexation est apte à coopérer avec le premier dispositif de support et le premier interrupteur de manière à faire passer l'organe primaire d'actionnement du premier interrupteur d'une de ses positions à l'autre lorsque l'élément mobile atteint son deuxième intervalle indexé de positions,
- le deuxième organe d'indexation est apte à coopérer avec le deuxième dispositif de support et le deuxième interrupteur de manière à faire passer l'organe primaire d'actionnement du deuxième interrupteur d'une de ses positions à l'autre lorsque l'élément mobile atteint son premier intervalle indexé de positions.

Avec ces deux derniers types de structures, il est possible d'utiliser des organes d'indexation de forme identique. Dans ce cas, ce n'est pas le type d'organe d'indexation qui est déterminant, mais uniquement son mode de montage sur le dispositif de support. Il devient alors possible de modifier le nombre d'interrupteurs affectés à une position indexée du disjoncteur sans même avoir recours à des jeux d'organes d'indexation supplémentaires.

Le nombre de positions indexées et celui des interrupteurs ne sont pas limitatif: en pratique, on utilise couramment trois positions indexées dites débrochée, test et embrochée et au moins trois interrupteurs de signalisation. C'est pourquoi, de manière préférentielle :
- l'élément mobile définit par rapport au châssis un troisième intervalle indexé de positions réduit le cas échéant à une troisième position indexée,
- l'appareillage comporte un troisième interrupteur électrique de signalisation comportant au moins deux bornes et un organe primaire d'actionnement apte à fermer un circuit électrique reliant les deux bornes en passant d'une première à une deuxième position,
- les moyens d'indexation sont aptes, dans leur premier état, à coopérer avec le troisième interrupteur de manière à faire passer l'organe primaire d'actionnement du troisième interrupteur d'une de ses positions à l'autre lorsque l'élément mobile atteint son troisième intervalle indexé de positions, et
- les moyens d'indexation sont aptes à être montés sur l'appareillage dans un troisième état dans lequel ils sont aptes à coopérer avec le premier interrupteur de manière à faire passer l'organe primaire d'actionnement du premier interrupteur d'une de ses positions à l'autre lorsque l'élément mobile atteint son troisième intervalle indexé de positions, et à coopérer avec le troisième interrupteur de manière à faire passer l'organe primaire d'actionnement du troisième interrupteur d'une de ses positions à l'autre lorsque l'élément mobile atteint son premier intervalle indexé de positions.

Il est également courant d'affecter plus d'un interrupteur de signalisation par position d'indexation, de manière à fournir une redondance suffisante au dispositif ou à alimenter en information différents dispositifs de commande ou de protection.

Préférentiellement, les bornes des interrupteurs sont fixes par rapport au châssis. Plus spécifiquement, chaque interrupteur comporte un boîtier , en ce que les boîtiers des interrupteurs sont fixés à un socle commun solidaire du châssis et servant également de support pour les connecteurs d'un bornier de raccordement électrique entre les circuits de commande de l'appareillage et l'extérieur. Les connecteurs ont la même forme que les boîtiers des interrupteurs, ce qui permet dans une certaine mesure d'intervertir les emplacements réservés aux uns et aux autres.

Selon un mode de réalisation, le premier organe d'indexation a une forme différente de celle du deuxième organe d'indexation. Cette disposition a l'avantage de permettre une visualisation précise de la fonction attribuée à chaque interrupteur.

Les avantages et caractéristiques de l'invention ressortiront de la description qui va suivre de différents modes de réalisation de l'invention, donné à titre d'exemples non limitatifs et représentés aux dessins annexés dans lesquels:
- la figure 1 représente schématiquement une vue en coupe d'un appareillage de coupure selon un premier mode de réalisation de l'invention, comprenant un disjoncteur embrochable et son châssis;
- la figure 2 représente en perspective le châssis de l'appareillage de la figure 1;
- la figure 3 représente certains éléments du châssis dans un état « extrait » de l'appareillage de la figure 1;
- la figure 4 représente certains éléments du châssis dans un état « débroché » de l'appareillage de la figure 1;
- la figure 5 représente certains éléments du châssis dans un état « test » de l'appareillage de la figure 1,
- la figure 6 représente certains éléments du châssis dans un état « embroché » de l'appareillage de la figure 1;
- la figure 7 représente en perspective le châssis muni de moyens d'indexation représentés individuellement sur les figures 8 à 10 ;
- la figure 8 représente des moyens d'indexation permettant d'activer un interrupteur de l'appareillage lorsque l'appareillage est dans son état embroché ;
- la figure 9 représente des moyens d'indexation permettant d'activer un interrupteur de l'appareillage lorsque l'appareillage est dans son état test ;
- la figure 10 représente des moyens d'indexation permettant d'activer un interrupteur de l'appareillage lorsque l'appareillage est dans son état débroché ;
- la figure 11 représente des moyens d'indexation agissant sur un interrupteur, dans un deuxième mode de réalisation de l'invention, permettant d'activer un interrupteur de l'appareillage lorsque l'appareillage est dans son état test ;
- la figure 12 représente une coupe selon le plan A-A de la figure 11 ;
- la figure 13 représente les moyens d'indexation du deuxième mode, dans une position permettant d'activer un interrupteur de l'appareillage lorsque l'appareillage est dans son état débroché ;
- la figure 14 représente les moyens d'indexation du deuxième mode, dans une position permettant d'activer un interrupteur de l'appareillage lorsque l'appareillage est dans son état embroché .

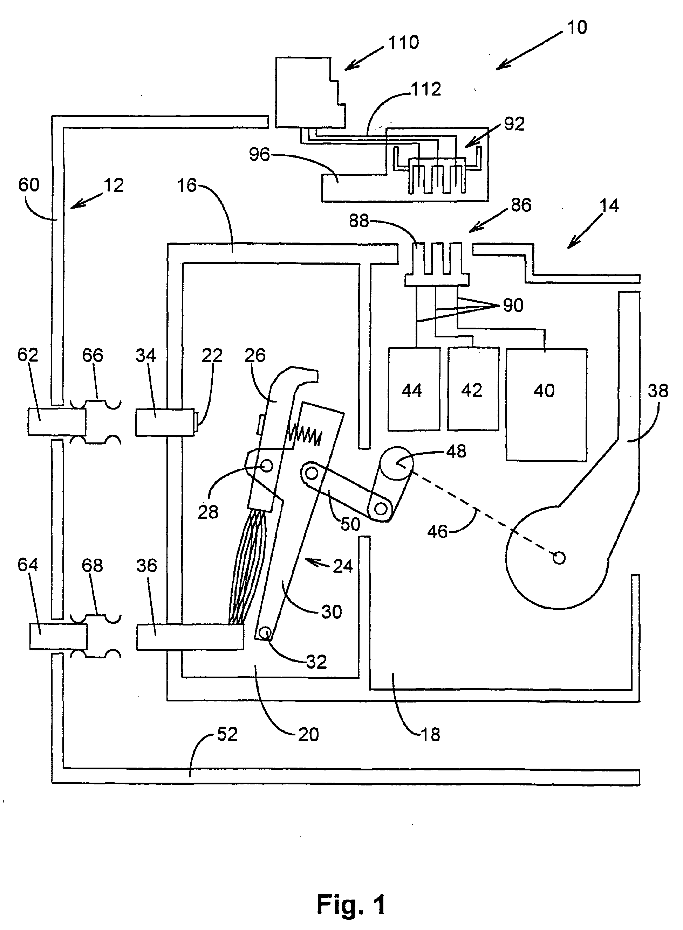

En référence à la figure 1, un appareillage électrique de coupure basse tension 10 comporte un châssis fixe 12, destiné à être placé par exemple dans une armoire électrique, et un disjoncteur débrochable 14, mobile en translation à l'intérieur du châssis 12. Le disjoncteur 14, de calibre élevé, notamment jusqu'à 6000 Ampères, est logé dans un boîtier 16 en matériau isolant subdivisé en un compartiment antérieur 18 et un compartiment postérieur 20. Le compartiment postérieur 20 renferme un ou plusieurs pôles comprenant chacun une paire d'organe de contact principaux avec un organe de contact fixe 22 et un organe de contact mobile 24. L'organe de contact mobile 24 comporte une pluralité de doigts de contact 26 montés pivotants autour d'un axe 28 solidaire d'une cage de contact 30 elle-même montée pivotante autour d'un axe fixe 32. Chaque organe de contact 22, 24 est relié électriquement à une borne électrique correspondante 34, 36 du disjoncteur. Une description plus détaillée de la structure des pôles pourra être trouvée dans le document FR-A-2 650 434. Le compartiment antérieur 18 renferme un dispositif de commande à levier d'armement 38 d'un système à ressort accumulateur d'énergie (non représenté), un déclencheur électronique 40 provoquant un déclenchement automatique lors de l'apparition d'un courant de défaut, notamment une surcharge, un court-circuit ou un défaut de terre, et des auxiliaires électriques 42, 44 de mesure, de signalisation et de contrôle, notamment des auxiliaires de signalisation du déclenchement ou de l'état du disjoncteur. Le dispositif de commande, figuré en traits interrompus en 46, agit sur un arbre des pôles 48, qui à son tour agit sur chacun des organes de contact mobiles 24 par l'intermédiaire d'une bielle 50. A une première position angulaire de l'arbre des pôles 48 correspond une position ouverte de chacun des organes de contact mobiles 24. A une seconde position angulaire de l'arbre des pôles 48 correspond une position fermée de l'ensemble des organes de contact mobiles 24. Pour une description plus précise du dispositif de commande 46, on renvoie au document EP-A-0 222 645.

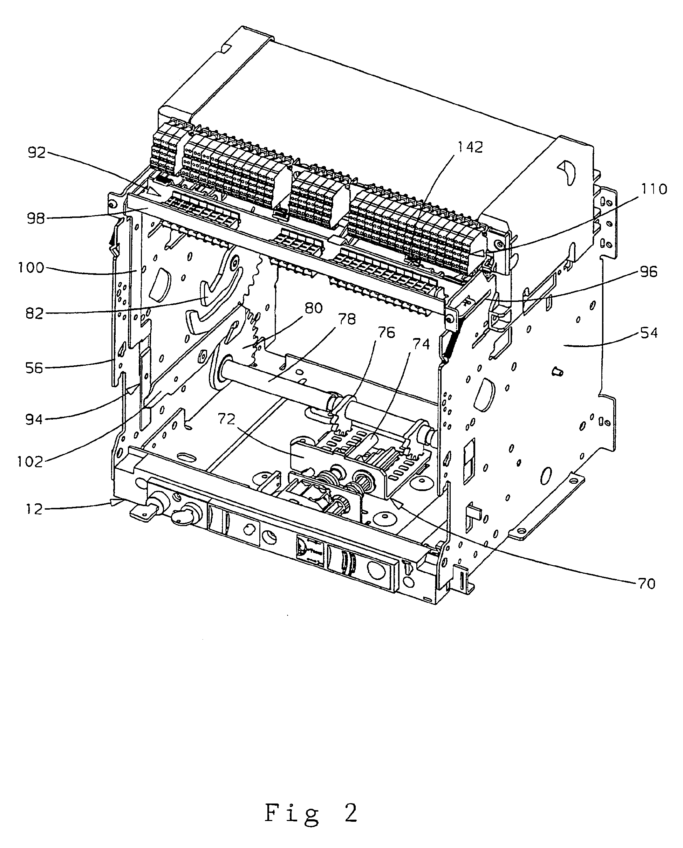

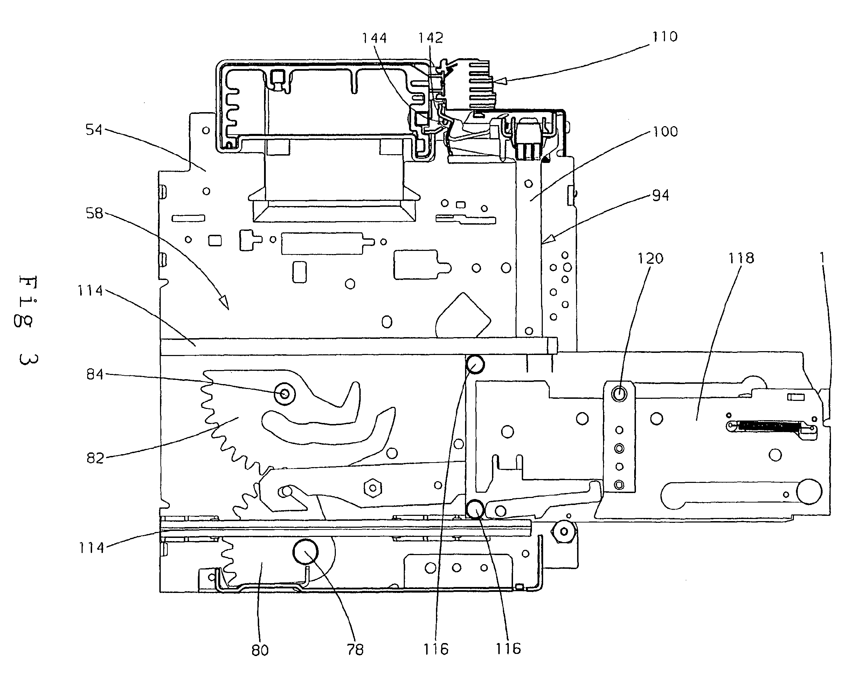

Le châssis 12 en forme de caisson ouvert représenté avec plus de détails sur la figure 2, comporte une plaque de base 52 et deux parois latérales opposées 54, 56 délimitant une ouverture frontale pour l'insertion ou le retrait du disjoncteur extractible. Les parois latérale 54, 56 sont munies de glissières d'embrochage destinées à supporter et guider le disjoncteur dans son mouvement. Ces glissières 58 sont visibles sur la figure 3 mais ont été ôtées sur la figure 2, de manière à révéler d'autres éléments de l'appareillage. A l'opposé de l'ouverture frontale se trouve un socle 60 de raccordement isolant constituant le fond du châssis, traversé par des plages de raccordement 62, 64 fixes équipées de pinces d'embrochage 66, 68. Les plages fixes 62, 64 sont destinées à être connectées à un jeu de barres de l'armoire électrique. En position embrochée du disjoncteur 14, les bornes 34, 36 du disjoncteur sont engagées dans les pinces d'embrochage 66, 68 qui assurent le contact électrique avec les plages fixes 62, 64. Le châssis 12 supporte un mécanisme d'embrochage 70 comportant un dispositif à crémaillère 72 coopérant avec une vis de commande 74 pouvant être actionnée par une manivelle non représentée. Le dispositif à crémaillère 72 entraîne des pignons 76 solidaire d'un arbre d'embrochage transversal 78. L'arbre supporte également à chacune de ses extrémités un pignon de renvoi 80 engrenant avec un secteur denté d'une came d'embrochage 82. Chaque came d'embrochage 82 est monté pivotante autour d'un axe 84 solidaire du châssis.

En plus des bornes principales 34, 36, le disjoncteur comporte un dispositif de connexion auxiliaire 86, susceptible d'établir ou d'interrompre la liaison électrique entre, d'une part, les auxiliaires et le déclencheur et d'autre part des moyens extérieurs de commande et de surveillance à distance. Le dispositif de connexion est muni d'une pluralité de connecteurs auxiliaires 88 fixes reliés par des conducteurs de câblage 90 aux différents auxiliaires 42, 44 et au déclencheur électronique 40. Les connecteurs auxiliaires 88 sont fixés au niveau de la paroi supérieure du boîtier 16 du disjoncteur.

Les connecteurs auxiliaires 88 fixes du disjoncteur coopèrent par enfichage avec un bornier mobile 92 associé à un dispositif de guidage 94 faisant partie du mécanisme d'embrochage 70. Ce dispositif de guidage 94, visible sur les figures 3 à 5, comporte une glissière de guidage 96 en L pratiquée dans chacune des parois latérales 54, 56 du châssis, et une traverse 98 de support du bornier mobile 92. La traverse 98 coopère avec deux tringles 100 verticales de transmission, guidées chacune en translation le long d'une paroi latérale du châssis. A l'extrémité inférieure de chaque tringle 100 s'articule l'extrémité d'un levier 102, dont l'autre extrémité comporte un crochet 104 coopérant avec un ergot 106 fixé sur le pignon de renvoi 80 correspondant. L'extrémité supérieure de chaque tringle 100 comporte une glissière horizontale 108 coopérant avec une extrémité de la traverse 98, qui coopèrent également avec la glissière 96 en L. Dans la partie haute du châssis est disposée un bornier de raccordement 110 fixe destiné au raccordement électrique avec les moyens de commande et de surveillance à distance. Un faisceau de conducteurs souples 112 raccorde électriquement le bornier mobile 92 au bornier de raccordement 110.

Le disjoncteur 14 est guidé en translation par rapport au châssis, grâce aux glissières d'embrochage 58. Ces glissières, visibles sur la figure 3, sont constituées de chaque côté par deux rails parallèles 114 qui coopèrent avec des galets 116 solidaires d'un bras 118 de support du disjoncteur. Le bras coulissant 118 comporte des encoches destinées à coopérer avec des ergots correspondants du disjoncteur pour permettre le maintien en position de celui-ci, ainsi qu'un tourillon 120 destiné à coopérer avec la came d'embrochage 82.

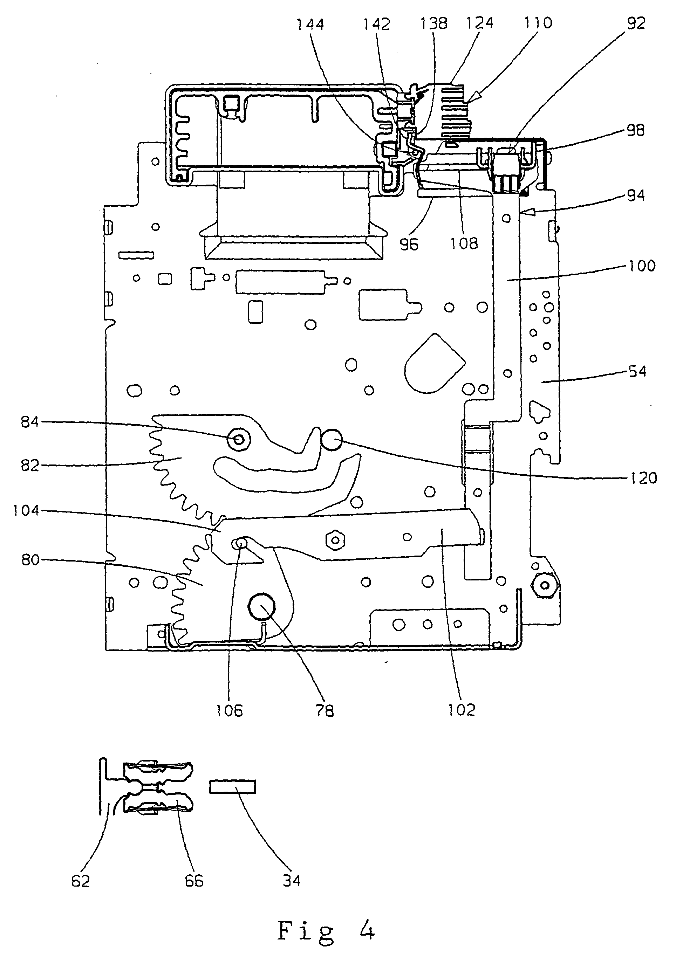

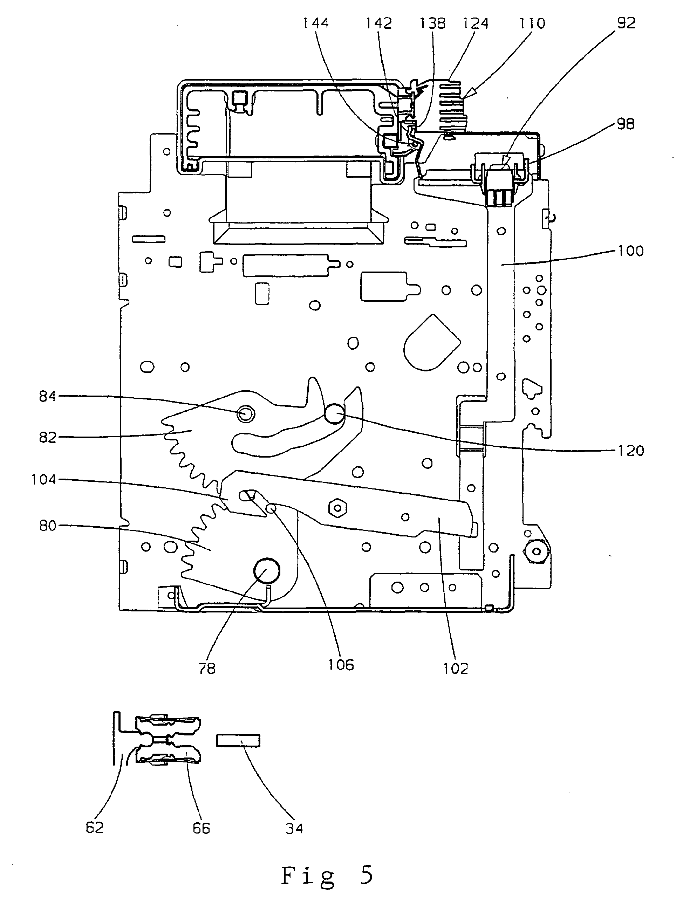

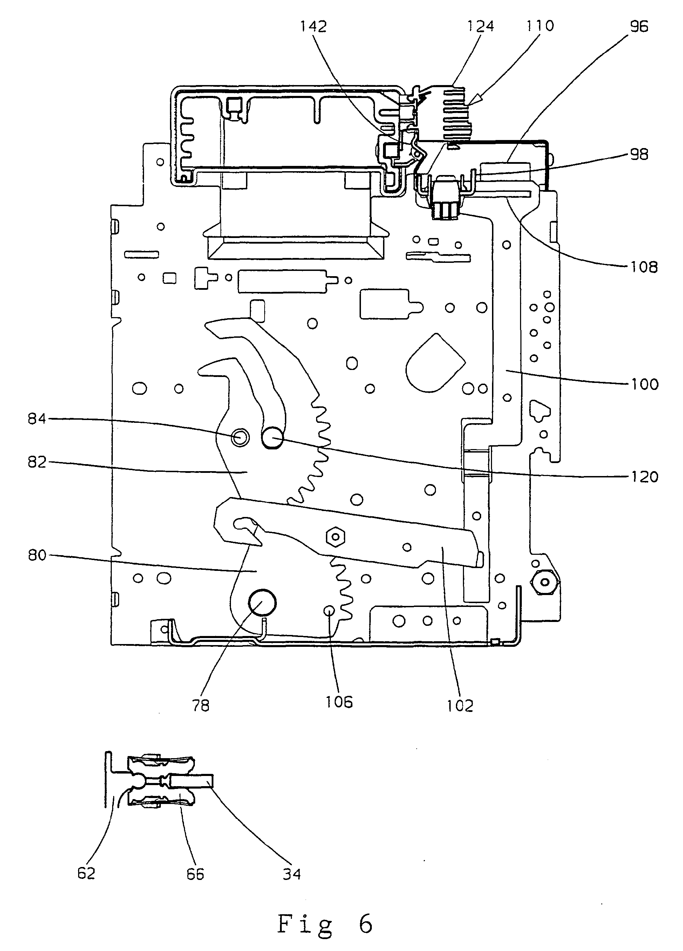

Le disjoncteur 14 est susceptible d'occuper par rapport au châssis 12 plusieurs positions échelonnées le long de la direction longitudinale d'embrochage, et notamment: une position extraite, correspondant à l'extension complète des bras de support visible sur la figure 3, une position débrochée avec ou sans test, et une position embrochée. Dans la position extraite, il est possible de procéder à la dépose du disjoncteur en désolidarisant celui-ci des glissières. A partir de cette position, le disjoncteur est poussé manuellement jusqu'à la position débrochée, dans laquelle les tourillons 120 viennent en butée contre les cames d'embrochage. On a représenté schématiquement sur la figure 4 l'état débroché de l'appareillage, en ôtant les bras de support coulissant et le disjoncteur, mais en laissant le tourillon 120. Dans cette position, les bornes 34, 36 du disjoncteur sont à une distance de sectionnement suffisante des pinces d'embrochage 66, 68, comme on le voit en bas de la figure 4, qui représente ces éléments en vue de dessus. Lorsque le mécanisme d'embrochage est actionné, il engendre la rotation de l'arbre d'embrochage 78 et des cames 82, qui n'agissent dans une première phase que sur les tringles verticales 100. Celles-ci abaissent la traverse 98 jusqu'à la position représentée sur la figure 5 et assurent l'enfichage du bornier mobile 92 sur les connecteurs auxiliaires 86. Durant cette phase, le disjoncteur reste immobile dans sa position débrochée, les bornes du disjoncteur 34, 36 restant par conséquent à la même distance de sectionnement des pinces d'embrochage 66, 68 que dans l'état débroché. Dans une deuxième phase, l'actionnement du mécanisme d'embrochage 70 assure le déplacement translatif des bras de support 118 et du disjoncteur 14 jusqu'à la position embrochée représentée sur la figure 6, assurant ainsi la connexion entre les bornes 34, 36 du disjoncteur et les plages de raccordement 62, 64 du châssis, par l'intermédiaire des pinces d'embrochage 66, 68. Durant cette phase, le bornier mobile 92 coulisse dans les glissières de guidage 96 et reste connecté aux connecteurs auxiliaires 86 du disjoncteur. Le mouvement du mécanisme d'embrochage 70 est réversible et le débrochage comporte lui aussi deux phases, une première de déplacement du disjoncteur vers sa position débrochée, assurant le sectionnement du circuit, et une deuxième de débranchement des circuits auxiliaires. Avec un tel dispositif, chaque état de l'appareillage - à savoir l'état « débroché » dans lequel les circuits principaux et auxiliaires du disjoncteur sont débranchés, l'état « test » dans lequel les circuits auxiliaires sont branchés alors que les circuits principaux sont toujours sectionnés, et l'état « embroché » dans lequel les circuits principaux et auxiliaires sont branchés - correspond de manière univoque à une position angulaire caractéristique de l'arbre d'embrochage, ainsi qu'une position caractéristique de la traverse 98 du bornier 92, qui se déplace en restant parallèle à elle-même sur une trajectoire en L par rapport au châssis.

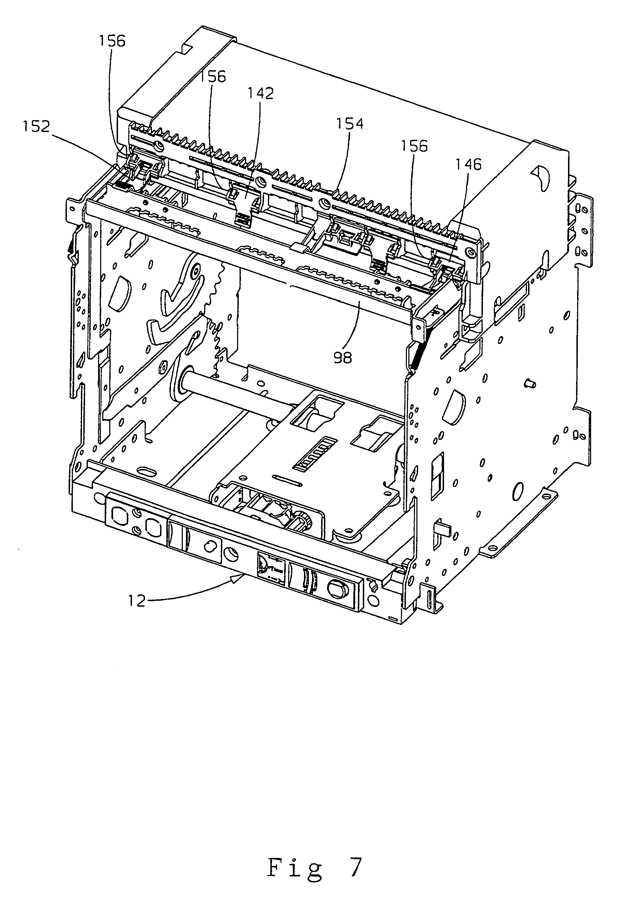

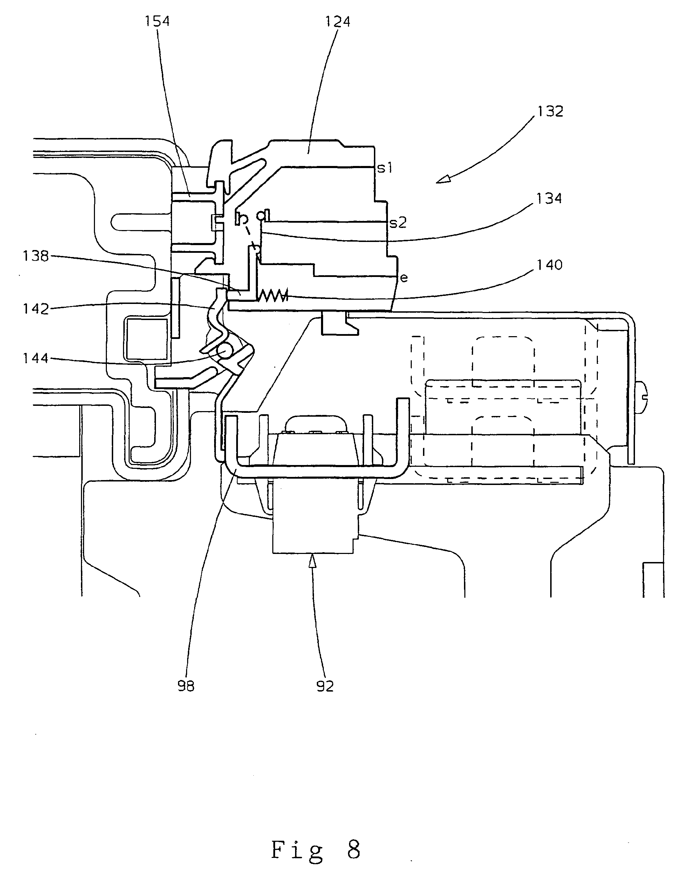

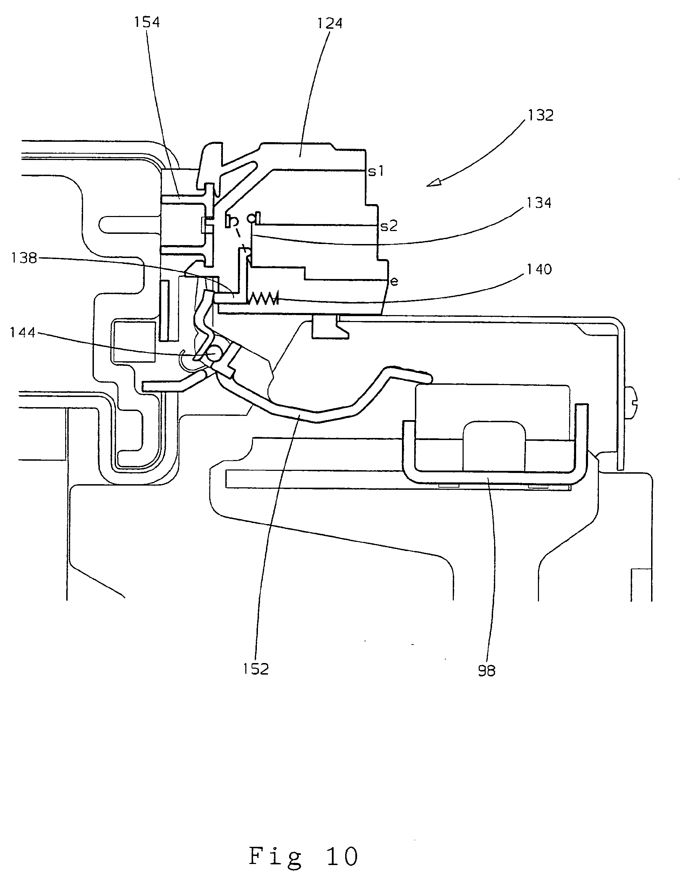

La figure 7 représente le châssis 12 de l'appareillage sans le bornier de raccordement 110, ce qui permet de dévoiler un socle 154 de support dudit bornier. Le socle 154 comporte des alvéoles 156, trois dans cet exemple. Chaque alvéole comporte latéralement deux supports permettant de réceptionner un axe de pivotement 144 (visible sur les figures 8 à 10) d'un levier 142, 146, 152 respectivement. Les alvéoles étant de formes identiques ainsi que les axes des différents leviers 142, 146, 152, il est possible de permuter les leviers à volonté

Chaque alvéole 156 permet de fixer trois interrupteurs identiques adjacents. L'un de ces interrupteurs 132 est schématisé sur la figure 8. L'interrupteur comporte un boîtier 124 destiné à être intégré au bornier de raccordement fixe 110 du châssis. Ce boîtier 124 comporte trois bornes de raccordement extérieur « e », « s₁ », « s₂ » et renferme un organe mobile de commutation 134 solidaire d'un bouton-poussoir 138. Le bouton-poussoir 138 est guidé en translation par rapport au boîtier 124 et une de ses extrémités émerge du boîtier 124. L'organe de commutation et le bouton-poussoir sont rappelés élastiquement vers une position de repos correspondant à une position extraite du bouton-poussoir par un ressort 140. Au repos, le bouton-poussoir est ressorti et le circuit est fermé entre « e » et « s₁ », et ouvert entre « e » et « s₂ ». Lorsque le bouton-poussoir est sollicité, le circuit s'ouvre entre « e » et « s₁», et se ferme entre « e » et « s₂».

Un bras mené du levier 142, pivotant autour de l'axe 144 supporté par le socle 154, sollicite les trois boutons-poussoirs 138 des trois interrupteurs 132 adjacents fixés à l'alvéole 156. Le bras menant du levier 142 est apte à coopérer avec la traverse 98 de support du bornier mobile 92, comme on le voit sur les figures 4 à 7. Tant que la traverse 98 ne vient pas en butée contre la partie gauche de la glissière de guidage 96 et de la glissière 108 de la tringle 100 (figures 4 et 5), le levier ne sollicite pas les boutons-poussoirs, si bien que l'interrupteur 132 reste dans sa position de repos. Dès que la traverse 98 du mécanisme 70 atteint la position extrême des figures 6 et 8, le levier est sollicité et enfonce les boutons-poussoirs, qui agissent sur l'organe mobile de commutation de façon à fermer le contact entre « e » et « s₂ ». Le levier permet ainsi de commander simultanément les trois interrupteurs 132 adjacents situés dans l'alvéole dans laquelle il est monté.

D'autres formes de leviers permettent d'obtenir une commutation de l'interrupteur pour d'autres positions du mécanisme.

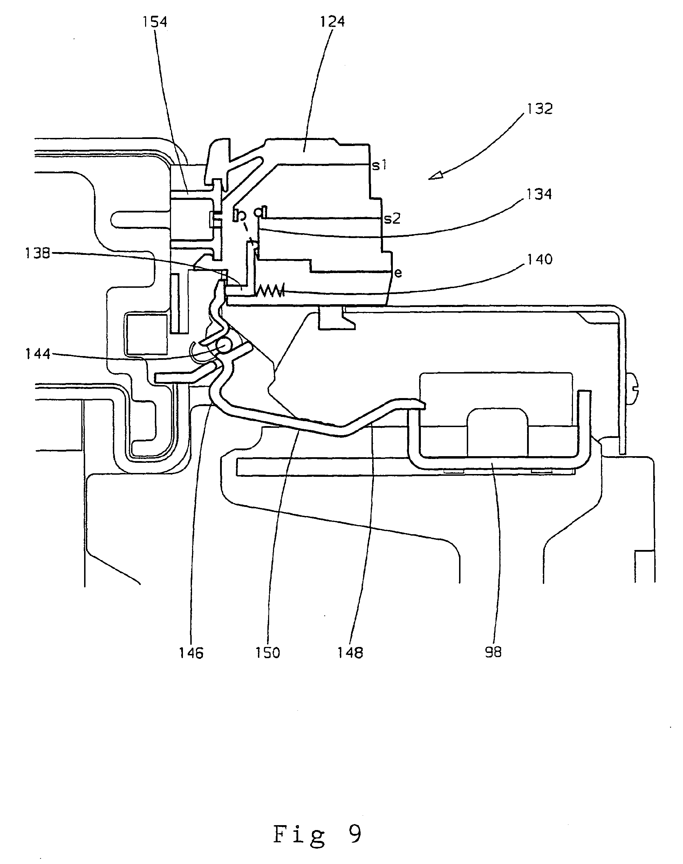

Le levier 146 de la figure 9 est placé dans une alvéole 156 qui permet de fixer trois interrupteurs 132 en tous points semblables aux interrupteurs précédents. Ce levier permet de détecter le passage du mécanisme par la position test. Contrairement au précédent, ce levier est rappelé dans le sens horaire sur la figure 8 par un ressort de rappel. Lorsque le mécanisme se trouve en position débrochée, la traverse 98 est en position haute et maintient le levier 146 contre la force de son ressort de rappel, de sorte que les boutons-poussoirs 138 ne sont pas sollicités. En passant en position de test, la traverse 98 s'efface et libère le levier 146 qui, sous la sollicitation de son ressort de rappel, vient enfoncer les boutons-poussoirs 138. En quittant la position de test dans la direction de la position embrochée, la traverse 98 effectue une translation horizontale, rencontre une rampe 148 du levier 146, coopère avec cette rampe 148 et soulève le bras menant du levier 146, contre la force du ressort de rappel. Le levier 146 pivote et libère les boutons-poussoirs 138. Dans la suite du mouvement jusqu'à la position embrochée, la traverse 98 fait butée contre une portée plane 150 du levier 146 et empêche le levier de reprendre sa position de repos. La forme du levier 146 permet d'assurer que les interrupteurs 132 sont fermés si et seulement si l'appareillage est dans son état de test.

Le levier 152 de la figure 9 coopère avec trois interrupteurs 132 en tous points semblables aux précédents, et est lui aussi rappelé dans le sens horaire par un ressort avec une force suffisante pour enfoncer les boutons-poussoirs 138. La forme du levier 152 est telle qu'en position débrochée, la traverse 98 coopère avec le levier 152 et le maintient dans une position libérant les boutons-poussoirs 138, contre la force du ressort de rappel. En quittant sa position débrochée, la traverse 98 libère le levier 152 qui vient enfoncer les boutons-poussoirs 138. Dans son mouvement ultérieur vers la position embrochée, la traverse 98 n'entre plus en contact avec les boutons-poussoirs 138, de sorte que les boutons-poussoirs 138 restent enfoncés. Les trois interrupteurs 132 sont donc fermés uniquement lorsque l'appareillage n'est pas dans son état débroché, ce qui donne une indication de cette position.

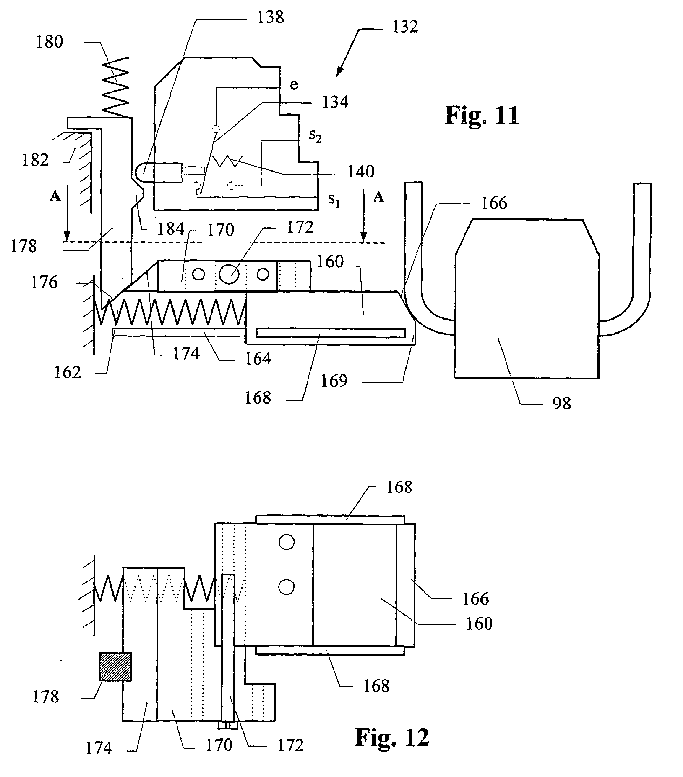

Un deuxième mode de réalisation de l'invention est représenté schématiquement sur les figures 11 à 14, pour lesquels les éléments inchangés conservent les signes de référence précédemment utilisés.

Dans ce mode de réalisation, la traverse 98 coopère avec un coulisseau 160, rappelé par un ressort 162 vers la droite sur la figure 12 et coulissant dans une rainure 164 solidaire du châssis, grâce à des languettes latérales 168. Lorsque la traverse 98 effectue sa translation verticale entre la position débrochée et la position de test, elle coopère avec une rampe 166 du coulisseau 160, de sorte que le coulisseau effectue une translation horizontale. Lorsque la traverse 98 se déplace horizontalement entre les positions test et embrochée, la traverse coopère avec une portée 169 du coulisseau, si bien que le coulisseau 160 suit le mouvement de la traverse 98. La coopération entre le coulisseau 160 et la traverse 98 permet de transformer de manière univoque le mouvement de la traverse 98, qui suit une trajectoire en L, en un mouvement purement rectiligne du coulisseau 160.

Un organe d'indexation en escalier 170 est fixé au coulisseau 160 par une vis 172. L'organe d'indexation 170 comporte une rampe 174, qui coopère avec une rampe 176 complémentaire d'un tiroir 178 guidé en translation par rapport au châssis 12. Le tiroir 178 est rappelé vers sa position de contact avec le l'organe d'indexation 170 par un ressort 180, et limité dans cette direction par une butée de fin de course 182. Le tiroir 178 possède une came 184 qui coopère avec un bouton-poussoir 138 d'un interrupteur 132 du même type que celui du premier mode de réalisation.

Tant que la traverse 98 n'a pas atteint sa position d'indexation, la rampe 176 n'est pas en contact avec l'organe d'indexation 170, le tiroir 178 se trouvant en butée de fin de course, du fait de l'action du ressort de rappel 180 : le bouton-poussoir 138 est alors ressorti. Lorsque la traverse 98 entraîne le coulisseau 160 vers la gauche jusqu'au point d'indexation, la rampe 174 de l'organe d'indexation 170 vient au contact du tiroir 178. La poursuite du mouvement de la traverse 98 entraîne la translation du tiroir 178, de sorte que la came 184 coopère avec le bouton-poussoir 138 et enfonce celui-ci. Lorsque la traverse 98 poursuit sa course vers la gauche au delà du point d'indexation, le tiroir 178 continue sa translation verticale vers le haut de sorte que la came 184 libère le bouton-poussoir 138. En sens inverse, c'est sous l'action du ressort de rappel 180 du tiroir 178 que ce dernier redescend lorsqu'il est libéré par la translation vers la droite de l'organe d'indexation 170 et du coulisseau 160.

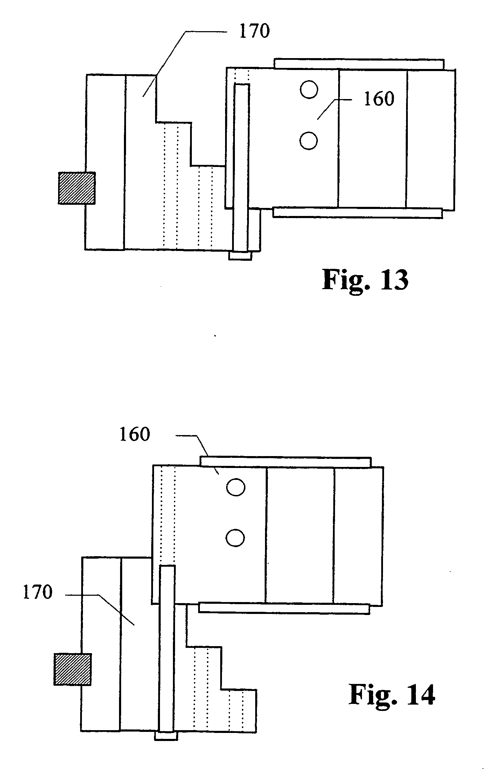

En fixant différemment l'organe d'indexation par rapport au coulisseau, il est possible d'obtenir différents points d'indexation : sur les figures 11 et 12 l'interrupteur commute lorsque le mécanisme d'embrochage 70 quitte sa position de test ; sur la figure 13, l'interrupteur commute lorsque le mécanisme d'embrochage 70 passe par la position débrochée ; et sur la figure 14, l'interrupteur commute lorsque le mécanisme d'embrochage 70 atteint sa position embrochée.

Comme dans le premier mode de réalisation, l'appareillage électrique possède plusieurs groupes d'interrupteurs répartis sur un socle de support semblable au socle 154 du premier mode. Chaque groupe d'interrupteurs correspondant à une alvéole est muni de moyens d'indexation. En modifiant le positionnement des organes d'indexation en escalier, il est possible d'affecter indifféremment à chaque alvéole une position d'indexation, et de permuter les positions d'indexation affectées à deux alvéoles.

Naturellement, diverses variations sont possible sans sortir du cadre de l'invention.

Ainsi, les deux modes de réalisation font référence à des appareillages pour lesquels le disjoncteur ne change pas de position par rapport au châssis lorsque l'appareillage passe de l'état débroché à l'état de test. Il existe des appareillages pour lesquels le disjoncteur est mobile par rapport au châssis dans cette phase, si bien qu'à chaque état débroché, en test ou embroché de l'appareillage correspond de façon inéquivoque une position du disjoncteur dans le châssis et une position du mécanisme d'embrochage. Dans ce cas, il est équivalent de prendre l'information sur le mécanisme d'embrochage, ou directement sur le disjoncteur.

Par ailleurs, le deuxième mode de réalisation présente un organe d'indexation en escalier coopérant avec un coulisseau possédant un taraudage unique pour la fixation de l'organe d'indexation. On peut également envisager dans le cadre de l'invention une disposition inverse des deux éléments, avec un coulisseau en escalier possédant une pluralité de taraudages, et un organe d'indexation de forme simple, venant se fixer au coulisseau alternativement sur l'un ou l'autre des taraudages, pour définir les différents points d'indexation.

Il est également possible de modifier la forme de la came agissant sur le bouton-poussoir, notamment en allongeant la partie correspondant à la position enfoncée du bouton-poussoir, de manière à définir intervalles d'indexation non ponctuels.

L'interrupteur décrit dans les deux modes de réalisation comporte un organe d'actionnement consistant en un bouton-poussoir. D'autres types d'organes sont toutefois envisageables, rappelés ou non vers une position de repos par un moyen de rappel élastique.

Chaque levier du premier mode de réalisation permet de commander simultanément trois interrupteurs, ce qui permet de multiplier les câblages et d'accroître la fiabilité de l'appareillage. On peut toutefois librement diminuer ou augmenter le nombre d'interrupteurs commandés simultanément par un organe d'indexation.

## Revendications

1. Appareillage électrique de coupure (10) comportant
• un châssis (12) fixe,
• un disjoncteur (14) mobile dans le châssis fixe entre une position embrochée et une position débrochée,
• un mécanisme (70) réversible d'entraînement du disjoncteur (14) entre sa position embrochée et sa position débrochée,
• un élément mobile (98), solidaire du mécanisme d'entraînement (70) ou du disjoncteur (14), susceptible de prendre une pluralité de positions par rapport au châssis (12), entre une première position extrême et une deuxième position extrême, et définissant un premier intervalle indexé de positions, réduit le cas échéant à une première position indexée, et un deuxième intervalle indexé de positions, réduit le cas échéant à une deuxième position indexée,
• un premier interrupteur électrique de signalisation (132) comportant au moins deux bornes et un organe primaire d'actionnement (138) apte à fermer un circuit électrique reliant les deux bornes en passant d'une première à une deuxième position,
• un deuxième interrupteur électrique de signalisation (132) comportant au moins deux bornes et un organe primaire d'actionnement (138) apte à fermer un circuit électrique reliant les deux bornes en passant d'une première à une deuxième position,
• des moyens d'indexation aptes à être montés sur l'appareillage dans un premier état dans lequel ils sont aptes à coopérer avec le premier interrupteur (132) de manière à faire passer l'organe primaire d'actionnement (138) du premier interrupteur (132) d'une de ses positions à l'autre lorsque l'élément mobile (98) atteint son premier intervalle indexé de positions, et à coopérer avec le deuxième interrupteur de manière à faire passer l'organe primaire d'actionnement (138) du deuxième interrupteur (132) d'une de ses positions à l'autre lorsque l'élément mobile (98) atteint son deuxième intervalle indexé de positions,
**caractérisé en ce que**
• les moyens d'indexation sont aptes à être montés sur l'appareillage dans un deuxième état dans lequel ils sont aptes à coopérer avec le premier interrupteur (132) de manière à faire passer l'organe primaire d'actionnement (138) du premier interrupteur (132) d'une de ses positions à l'autre lorsque l'élément mobile (98) atteint son deuxième intervalle indexé de positions, et à coopérer avec le deuxième interrupteur (132) de manière à faire passer l'organe primaire d'actionnement (138) du deuxième interrupteur d'une de ses positions à l'autre lorsque l'élément mobile (98) atteint son premier intervalle indexé de positions.

2. Appareillage de coupure selon la revendication 1, **caractérisé en ce que** les moyens d'indexation comportent :
• un premier dispositif de support (144 ; 160),
• un deuxième dispositif de support (144 ; 160),
• un premier organe d'indexation (142, 146, 152 ; 170) qui, dans le premier état des moyens d'indexation, coopère avec le premier dispositif de support (144 ; 160) et avec le premier interrupteur et qui, dans le deuxième état des moyens d'indexation, coopère avec le deuxième dispositif de support (144 ; 160) et avec le deuxième interrupteur,
• un deuxième organe d'indexation (142, 146, 152 ; 170) qui, dans le premier état des moyens d'indexation coopère avec le deuxième dispositif de support (144 ; 160) et avec le deuxième interrupteur, et qui, dans le deuxième état des moyens d'indexation, coopère avec le premier dispositif de support (144 ; 160) et avec le premier interrupteur.

3. Appareillage de coupure selon la revendication 2 **caractérisé en ce que**, dans chacun des états des moyens d'indexation, le premier et le deuxième dispositifs de support (144) sont fixes par rapport aux bornes des interrupteurs et **en ce que**, dans chacun des états des moyens d'indexation, chaque organe d'indexation (142, 146, 152) est mobile par rapport au dispositif de support (144) avec lequel il coopère et est apte à assurer une transmission cinématique entre l'élément mobile d'entraînement et l'organe primaire d'actionnement.

4. Appareillage de coupure selon la revendication 3, **caractérisé en ce que** chacun des organes d'indexation est un levier qui, dans chacun des états des moyens d'indexation, est lié par un pivot au dispositif de support (144) avec lequel il coopère.

5. Appareillage de coupure selon la revendication 2, **caractérisé en ce que**, dans chacun des états des moyens d'indexation, le premier et le deuxième dispositifs de support (160) sont mobiles par rapport aux bornes des interrupteurs (132) et sont entraînés par l'élément mobile (98), et **en ce que**, dans chacun des états des moyens d'indexation, chaque organe d'indexation (170) est fixe par rapport au dispositif de support (160) avec lequel il coopère et est apte à assurer une transmission cinématique entre le dispositif de support (160) avec lequel il coopère et l'organe primaire d'actionnement (138).

6. Appareillage de coupure selon la revendication 2, **caractérisé en ce que**, dans un autre état des moyens d'indexation,
• le premier organe d'indexation (170) est apte à coopérer avec le premier dispositif de support (160) et le premier interrupteur (132) de manière à faire passer l'organe primaire d'actionnement (138) du premier interrupteur d'une de ses positions à l'autre lorsque l'élément mobile (98) atteint son deuxième intervalle indexé de positions,
• le deuxième organe d'indexation (170) est apte à coopérer avec le deuxième dispositif de support (160) et le deuxième interrupteur (132) de manière à faire passer l'organe primaire d'actionnement (138) du deuxième interrupteur d'une de ses positions à l'autre lorsque l'élément mobile (98) atteint son premier intervalle indexé de positions.

7. Appareillage de coupure selon l'une quelconque de revendications précédentes, **caractérisé en ce que**
• l'élément mobile (98) définit par rapport au châssis (12) un troisième intervalle indexé de positions réduit le cas échéant à une troisième position indexée,
• l'appareillage comporte un troisième interrupteur électrique de signalisation (132) comportant au moins deux bornes et un organe primaire d'actionnement (138) apte à fermer un circuit électrique reliant les deux bornes en passant d'une première à une deuxième position,
• les moyens d'indexation sont aptes, dans leur premier état, à coopérer avec le troisième interrupteur (132) de manière à faire passer l'organe primaire d'actionnement (138) du troisième interrupteur d'une de ses positions à l'autre lorsque l'élément mobile atteint son troisième intervalle indexé de positions, et
• les moyens d'indexation sont aptes à être montés sur l'appareillage dans un troisième état dans lequel ils sont aptes à coopérer avec le premier interrupteur (132) de manière à faire passer l'organe primaire d'actionnement du premier interrupteur d'une de ses positions à l'autre lorsque l'élément mobile atteint son troisième intervalle indexé de positions, et à coopérer avec le troisième interrupteur de manière à faire passer l'organe primaire d'actionnement du troisième interrupteur d'une de ses positions à l'autre lorsque l'élément mobile atteint son premier intervalle indexé de positions.

8. Appareillage de coupure selon l'une quelconque de revendications précédentes, **caractérisé en ce que** les bornes (e, s₁, s₂) des interrupteurs (132) sont fixes par rapport au châssis.

9. Appareillage de coupure selon la revendication 8, **caractérisé en ce que** chaque interrupteur comporte un boîtier (124), **en ce que** les boîtiers (124) des interrupteurs (132) sont fixés à un socle commun (154) solidaire du châssis (12) et servant également de support pour les connecteurs d'un bornier de raccordement électrique entre les circuits de commande de l'appareillage et l'extérieur.

10. Appareillage de coupure selon l'une quelconque des revendications précédentes, **caractérisé en ce que** le premier organe d'indexation (142, 146, 152) a une forme différente de celle du deuxième organe d'indexation (142, 146, 152).

## Claims

1. Electrical switchgear apparatus (10) comprising:
- a fixed frame (12),
- a circuit breaker (14) movable in the fixed frame between a plugged-in position and a plugged-out position,
- a reversible mechanism (70) for driving the circuit breaker (14) between its plugged-in position and its plugged-out position,
- a movable element (98), integral to the drive mechanism (70) or to the circuit breaker (14), able to take a plurality of positions with respect to the frame (12) between a first extreme position and a second extreme position, and defining a first indexed positions interval, which may be reduced to a first indexed position, and a second indexed positions interval, which may be reduced to a second indexed position,
- a first electrical indicating switch (132) comprising at least two terminals and a primary actuating means (138) designed to close an electrical circuit connecting the two terminals by switching from a first position to a second position,
- a second electrical indicating switch (132) comprising at least two terminals and a primary actuating means (138) designed to close an electrical circuit connecting the two terminals by switching from a first position to a second position,
- indexing means designed to be fitted on the switchgear apparatus in a first state in which they are designed to operate in conjunction with the first switch (132) so as to make the primary actuating means (138) of the first switch (132) move from one of its positions to the other when the movable element (98) reaches its first indexed positions interval, and to operate in conjunction with the second switch so as to make the primary actuating means (138) of the second switch (132) move from one of its positions to the other when the movable element (98) reaches its second indexed positions interval,
**characterized in that**
- the indexing means are designed to be fitted on the switchgear apparatus in a second state in which they are able to operate in conjunction with the first switch (132) so as to make the primary actuating means (138) of the first switch (132) move from one of its positions to the other when the movable element (98) reaches its second indexed positions interval, and to operate in conjunction with the second switch (132) so as to make the primary actuating means (138) of the second switch move from one of its positions to the other when the movable element (98) reaches its first indexed positions interval.

2. Switchgear apparatus according to claim 1, **characterized in that** the indexing means comprise:
- a first support device (144; 160),
- a second support device (144; 160),
- a first indexing means (142, 146, 152; 170) which, in the first state of the indexing means, operates in conjunction with the first support device (144; 160) and with the first switch and which, in the second state of the indexing means, operates in conjunction with the second support device (144; 160) and with the second switch,
- a second indexing means (142, 146, 152; 170) which, in the first state of the indexing means, operates in conjunction with the second support device (144; 160) and with the second switch and which, in the second state of the indexing means, operates in conjunction with the first support device (144; 160) and with the first switch.

3. Switchgear apparatus according to claim 2, **characterized in that**, in each of the states of the indexing means, the first and second support devices (144) are fixed with respect to the terminals of the switches and that, in each of the states of the indexing means, each indexing means (142, 146, 152) is movable with respect to the support device (144) with which it operates in conjunction and is able to perform kinematic transmission between the movable driving means and the primary actuating means.

4. Switchgear apparatus according to claim 3, **characterized in that** each of the indexing means is a lever which, in each of the states of the indexing means, is linked by a pivot to the support device (144) with which it operates in conjunction.

5. Switchgear apparatus according to claim 2, **characterized in that**, in each of the states of the indexing means, the first and second support devices (160) are movable with respect to the terminals of the switches (132) and are driven by the movable element (98), and that, in each of the states of the indexing means, each indexing means (170) is fixed with respect to the support device (160) with which it operates in conjunction and is able to perform kinematic transmission between the support device (160) with which it operates in conjunction and the primary actuating means (138).

6. The switchgear apparatus according to claim 2, **characterized in that**, in another state of the indexing means,
- the first indexing means (170) are designed to operate in conjunction with the first support device (160) and the first switch (132) so as to make the primary actuating means (138) of the first switch move from one of its positions to the other when the movable element (98) reaches its second indexed positions interval,
- the second indexing means (170) are designed to operate in conjunction with the second support device (160) and the second switch (132) so as to make the primary actuating means (138) of the second switch move from one of its positions to the other when the movable element (98) reaches its first indexed positions interval.

7. Switchgear apparatus according to any one of the foregoing claims, **characterized in that**
- the movable element (98) defines with respect to the frame (12) a third indexed positions interval which may be reduced to a third indexed position,
- the switchgear apparatus comprises a third electrical indicating switch (132) comprising at least two terminals and a primary actuating means (138) designed to close an electrical circuit connecting the two terminals by switching from a first to a second position,
- the indexing means are designed, in their first state, to operate in conjunction with the third switch (132) so as to make the primary actuating means (138) of the third switch move from one of its positions to the other when the movable element reaches its third indexed positions interval, and
- the indexing means are designed to be fitted onto the switchgear apparatus in a third state in which they are able to operate in conjunction with the first switch (132) so as to make the primary actuating means of the first switch move from one of its positions to the other when the movable element reaches its third indexed positions interval, and to operate in conjunction with the third switch so as to make the primary actuating means of the third switch move from one of its positions to the other when the movable element reaches its first indexed positions interval.

8. Switchgear apparatus according to any one of the foregoing claims, **characterized in that** the terminals (e, s₁, s₂) of the switches are fixed with respect to the frame.

9. Switchgear apparatus according to claim 8, **characterized in that** each switch comprises a case (124), that the cases (124) of the switches (132) are fixed to a common support base (154) integral to the frame (12) and also acting as support for the connectors of an electrical connection terminal between the control circuits of the switchgear apparatus and the outside.

10. Switchgear apparatus according to any one of the foregoing claims, **characterized in that** the first indexing means (142, 146, 152) has a different shape from that of the second indexing means (142, 146, 152).

## Patentansprüche

1. Elektrisches Schaltgerät (10), das
• ein feststehendes Chassis (12),
• einen im feststehenden Chassis zwischen einer Betriebsstellung und einer Trennstellung verschiebbaren Leistungsschalter (14),
• einen umkehrbaren Antriebsmechanismus (70) zur Verschiebung des Leistungsschalters (14) zwischen seiner Betriebsstellung und seiner Trennstellung,
• ein am Antriebsmechanismus (70) oder am Leistungsschalter (14) befestigtes bewegliches Element (98), das in Bezug zum Chassis (12) mehrere Stellungen zwischen einer ersten Endstellung und einer zweiten Endstellung einnehmen kann und einen ersten indexierten Positionsabstand, ggf. reduziert auf eine erste indexierte Stellung, sowie einen zweiten indexierten Positionsabstand, ggf. reduziert auf eine zweite indexierte Stellung, definiert
• einen ersten elektrischen Meldeschalter (132) mit mindestens zwei Klemmen und einem Primärbetätigungsorgan (138), das durch Übergang von einer ersten Stellung in eine zweite Stellung einen die beiden Klemmen miteinander verbindenden Stromkreis schließen kann,
• einen zweiten elektrischen Meldeschalter (132) mit mindestens zwei Klemmen und einem Primärbetätigungsorgan (138), das durch Übergang von einer ersten Stellung in eine zweite Stellung einen die beiden Klemmen miteinander verbindenden Stromkreis schließen kann,
• sowie Indexiermittel umfasst, die in einer ersten Stellung am Schaltgerät befestigt werden können, in der sie so mit dem ersten Meldeschalter (132) zusammenwirken können, dass das Primärbetätigungsorgan (138) des ersten Meldeschalters (132) von einer seiner Stellungen in die andere überführt wird, wenn das bewegliche Element (98) seinen ersten indexierten Positionsabstand erreicht, und so mit dem zweiten Meldeschalter zusammenwirken können, dass das Primärbetätigungsorgan (138) des zweiten Meldeschalters (132) von einer seiner Stellungen in die andere überführt wird, wenn das bewegliche Element (98) seinen zweiten indexierten Positionsabstand erreicht,
**dadurch gekennzeichnet, dass**
• die Indexiermittel in einer zweiten Stellung am Schaltgerät befestigt werden können, in der sie so mit dem ersten Meldeschalter (132) zusammenwirken können, dass das Primärbetätigungsorgan (138) des ersten Meldeschalters (132) von einer seiner Stellungen in die andere überführt wird, wenn das bewegliche Element (98) seinen zweiten indexierten Positionsabstand erreicht, und so mit dem zweiten Meldeschalter (132) zusammenwirken können, dass das Primärbetätigungsorgan (138) des zweiten Meldeschalters von einer seiner Stellungen in die andere überführt wird, wenn das bewegliche Element (98) seinen ersten indexierten Positionsabstand erreicht.

2. Schaltgerät nach Anspruch 1, **dadurch gekennzeichnet, dass** die Indexiermittel
• eine erste Tragvorrichtung (144; 160),
• eine zweite Tragvorrichtung (144; 160),
• ein erstes Indexierorgan (142, 146, 152; 170), das in der ersten Stellung der Indexiermittel mit der ersten Tragvorrichtung (144; 160) und mit dem ersten Meldeschalter zusammenwirkt und in der zweiten Stellung der Indexiermittel mit der zweiten Tragvorrichtung (144; 160) und mit dem zweiten Meldeschalter zusammenwirkt,
• sowie ein zweites Indexierorgan (142, 146, 152; 170) umfassen, das in der ersten Stellung der Indexiermittel mit der zweiten Tragvorrichtung (144; 160) und mit dem zweiten Meldeschalter zusammenwirkt und in der zweiten Stellung der Indexiermittel mit der ersten Tragvorrichtung (144; 160) und mit dem ersten Meldeschalter zusammenwirkt.

3. Schaltgerät nach Anspruch 2, **dadurch gekennzeichnet dass** in jeder Stellung der Indexiermittel die erste und die zweite Tragvorrichtung (144) in Bezug zu den Klemmen der Meldeschalter feststehen und dass in jeder Stellung der Indexiermittel jedes Indexierorgan (142, 146, 152) in Bezug zu der mit ihm zusammenwirkenden Tragvorrichtung (144) beweglich und in der Lage ist, eine kinematische Kraftübertragung zwischen dem beweglichen Antriebselement und dem Primärbetätigungsorgan zu gewährleisten.

4. Schaltgerät nach Anspruch 3, **dadurch gekennzeichnet**, das jedes der Indexierorgane als Hebel ausgebildet ist, der in jeder der Stellungen der Indexiermittel über ein Drehgelenk mit der ihm zugeordneten Tragvorrichtung (144) verbunden ist.

5. Schaltgerät nach Anspruch 2, **dadurch gekennzeichnet dass** in jeder Stellung der Indexiermittel die erste und die zweite Tragvorrichtung (160) in Bezug zu den Klemmen der Meldeschalter (132) beweglich sind und vom beweglichen Element (98) mitgeführt werden und dass in jeder Stellung der Indexiermittel jedes Indexierorgan (170) in Bezug zu der mit ihm zusammenwirkenden Tragvorrichtung (160) feststeht und in der Lage ist, eine kinematische Kraftübertragung zwischen der mit ihm zusammenwirkenden Tragvorrichtung (160) und dem Primärbetätigungsorgan (138) zu gewährleisten.

6. Schaltgerät nach Anspruch 2, **dadurch gekennzeichnet, dass** in einer anderen Stellung der Indexiermittel
• das erste Indexierorgan (170) so mit der ersten Tragvorrichtung (160) und dem ersten Meldeschalter (132) zusammenwirken kann, dass das Primärbetätigungsorgan (138) des ersten Meldeschalters von einer seiner Stellungen in die andere Stellung überführt wird, wenn das bewegliche Element (98) seinen zweiten indexierten Positionsabstand erreicht, und
• das zweite Indexierorgan (170) so mit der zweiten Tragvorrichtung (160) und dem zweiten Meldeschalter (132) zusammenwirken kann, dass das Primärbetätigungsorgan (138) des zweiten Meldeschalters von einer seiner Stellungen in die andere Stellung überführt wird, wenn das bewegliche Element (98) seinen ersten indexierten Positionsabstand erreicht.

7. Elektrisches Schaltgerät nach irgendeinem der vorhergehenden Ansprüche, **dadurch gekennzeichnet, dass**
• das bewegliche Element (98) in Bezug zum Chassis (12) einen dritten indexierten Stellungsabstand, gegebenenfalls reduziert auf eine dritte indexierte Stellung definiert,
• das Schaltgerät einen dritten elektrischen Meldeschalter (132) mit mindestens zwei Klemmen und einem Primärbetätigungsorgan (138) umfasst, das durch Übergang von einer ersten Stellung in eine zweite Stellung einen die beiden Klemmen miteinander verbindenden Stromkreis schließen kann,
• die Indexiermittel in ihrer ersten Stellung somit dem dritten Meldeschalter (132) zusammenwirken können, dass das Primärbetätigungsorgan (138) des dritten Meldeschalters von einer seiner Stellungen in die andere Stellung überführt wird, wenn das bewegliche Element seinen dritten indexierten Positionsabstand erreicht, und
• die Indexiermittel in einer dritten Stellung am Schaltgerät befestigt werden können, in der sie so mit dem ersten Meldeschalter (132) zusammenwirken können, dass das Primärbetätigungsorgan des ersten Meldeschalters von einer seiner Stellungen in die andere überführt wird, wenn das bewegliche Element seinen dritten indexierten Positionsabstand erreicht, und so mit dem dritten Meldeschalter zusammenwirken können, dass das Primärbetätigungsorgan des dritten Meldeschalters von einer seiner Stellungen in die andere überführt wird, wenn das bewegliche Element seinen ersten indexierten Positionsabstand erreicht.

8. Schaltgerät nach irgendeinem der vorhergehenden Ansprüche, **dadurch gekennzeichnet, dass** die Klemmen "e", "s₁", "s₂" der Meldeschalter (132) in Bezug zum Chassis feststehen.

9. Schaltgerät nach Anspruch 8, **dadurch gekennzeichnet, dass** jeder Meldeschalter ein Gehäuse (124) umfasst, und dass die Gehäuse (124) der Meldeschalter (132) auf einem gemeinsamen Tragsockel (154) befestigt sind, der fest mit dem Chassis (12) verbunden ist und gleichzeitig als Träger für die Steckverbinder einer Klemmleiste zur Verbindung der Steuerkreise des Leistungsschalters mit den äußeren Stromkreisen dient.

10. Schaltgerät nach irgendeinem der vorhergehenden Ansprüche, **dadurch gekennzeichnet, dass** das erste Indexierorgan (142, 146, 152) eine andere Form aufweist als das zweite Indexierorgan (142, 146, 152).
